# EUROPEAN PATENT APPLICATION

(11) **EP 4 501 100 A1**
(43) Date of publication of application: **05.02.2025**
(21) Application number: 23778881.5
(22) Date of filing: 08.02.2023
(51) Int. Cl.: A01G 7/00, A01C 1/00

(54) **INFORMATION PROCESSING DEVICE, INFERENCE DEVICE, MACHINE LEARNING DEVICE, INFORMATION PROCESSING METHOD, INFERENCE METHOD, AND MACHINE LEARNING METHOD**

(30) Priority: 28.03.2022 JP 2022051257
(71) Applicant: Toyo Seikan Group Holdings, Ltd., Shinagawa-ku, Tokyo 141-8627 (JP)
(72) Inventor: KUNIMASA Hidehiko, Tokyo 141-8627 (JP); TANABE Suguru, Tokyo 141-8627 (JP); FURUKAWA Satoshi, Tokyo 141-8627 (JP); OKAMURA Hiroshi, Tokyo 141-8627 (JP)
(74) Representative: Piticco, Lorena
(86) International application number: PCT/JP2023/004141
(87) International publication number: WO 2023/188845

(57) **Abstract**

An information processing device that can easily predict the seed quality is provided. An information processing device 6 includes an information acquiring unit 600 configured to acquire, as seed management information about a seed to be predicted, a state of a plant for seed collection from which the seed is collected, and a state of the seed; and a generation processing unit 601 configured to generate seed quality information for the seed to be predicted, by inputting the seed management information acquired by the information acquiring unit 600 into a learning model 12A that has been taught, through machine learning, a correlation between the seed management information about a seed being a training object and the seed quality information indicating quality related to germination or maturity of the seed.

## Description

### Technical Field

The present invention relates to an information processing device, an inference device, a machine learning device, an information processing method, an inference method, and a machine learning method.

### Background Art

In the related art, seed collection/cultivation of a plant for seed collection are performed for the purpose of seed production (seed collection). For example, PTL 1 discloses the use of indices referred to as germination rate, maturity rate, healthy seedling rate, and the like in evaluation of the quality related to germination and maturity of seeds collected from the plant for seed collection.

### Citation List

### Patent Literature

PTL 1: JP 2008-167677 A

### Summary of Invention

### Technical Problem

Seed quality can be checked by sowing a seed to be evaluated on a trial basis and inspecting the seed. However, such inspection cannot confirm the seed quality until the actual seed is available for inspection. Also, equipment to carry out the inspection, and inspectors with specialist knowledge or who are skilled in inspection are required. Therefore, for various processes that are carried out between the process of cultivating the plant for seed collection, and the process in which the seeds collected from the plant for seed collection are distributed and sown as a crop so as to be germinated and matured, it is difficult to determine the seed quality in each process. As a result, there are limitations in improving the management conditions of the plant for seed collection and seeds in each process in maintaining or improving the seed quality.

To solve the above-mentioned problems, an object of the present invention is to provide an information processing device, an inference device, a machine learning device, an information processing method, an inference method, and a machine learning method that can easily predict the seed quality.

### Solution to Problem

To achieve the above-mentioned object, an information processing device according to an aspect of the present invention includes: an information acquiring unit configured to acquire, as seed management information about a seed to be predicted, a state of a plant for seed collection from which the seed is collected and a state of the seed; and a generation processing unit configured to generate seed quality information for the seed to be predicted, by inputting the seed management information acquired by the information acquiring unit into a learning model that has been taught, through machine learning, a correlation between the seed management information about a seed being a training object and the seed quality information indicating quality related to germination or maturity of the seed.

### Advantageous Effects of Invention

With the information processing device according to an aspect of the present invention, the quality of the seed to be predicted is predicted on the basis of the seed quality information generated, by inputting, into the learning model, the seed management information including the state of the plant for seed collection from which the seed to be predicted is collected and the state of that seed, and thus the seed quality can be easily predicted.

Issues, configurations and effects other than those mentioned above will be clarified in the embodiments of the invention described below.

### Brief Description of Drawings

FIG. 1 is a diagram illustrating an example of a general configuration of a seed management system 1.
FIG. 2 is a diagram illustrating an example of a data configuration of a seed collection/cultivation process table 410 of a seed management database 41.
FIG. 3 is a diagram illustrating an example of a data configuration of a harvesting process table 411 of the seed management database 41.
FIG. 4 is a diagram illustrating an example of a data configuration of a treatment process table 412 of the seed management database 41.
FIG. 5 is a diagram illustrating an example of a data configuration of a storage process table 413 of the seed management database 41.
FIG. 6 is a diagram illustrating an example of a data configuration of a transporting process table 414 of the seed management database 41.
FIG. 7 is a diagram illustrating an example of a data configuration of a crop cultivation process table 415 of the seed management database 41.
FIG. 8 is a diagram illustrating an example of a data configuration of the seed collection/cultivation process table 410 of a seed quality table 416 of the seed management database 41.
FIG. 9 is a diagram illustrating an example of a hardware configuration of a computer 900.
FIG. 10 is a block diagram illustrating an example of a machine learning device 5 according to a first embodiment.
FIG. 11 is a diagram illustrating an example of a first learning model 12A and a first training data 13A of a case where seed management information includes a state of a plant for seed collection and a state of a seed.
FIG. 12 is a flowchart illustrating an example of a machine learning method of a machine learning device 5.
FIG. 13 is a block diagram illustrating an example of an information processing device 6 according to the first embodiment.
FIG. 14 is a diagram illustrating an example of a function of the information processing device 6 according to the first embodiment.
FIG. 15 is a flowchart illustrating an example of an information processing method of the information processing device 6.
FIG. 16 is a block diagram illustrating an example of a machine learning device 5a according to a second embodiment.
FIG. 17 is a diagram illustrating an example of a second learning model 12B and a second training data 13B according to the second embodiment.
FIG. 18 is a block diagram illustrating an example of an information processing device 6a according to the second embodiment.
FIG. 19 is a diagram illustrating an example of a function of the information processing device 6a according to the second embodiment.
FIG. 20 is a block diagram illustrating an example of a machine learning device 5b according to a third embodiment.
FIG. 21 is a diagram illustrating an example of a third learning model 12C and a third training data 13C according to the third embodiment.
FIG. 22 is a block diagram illustrating an example of an information processing device 6b according to the third embodiment.
FIG. 23 is a diagram illustrating an example of a function of the information processing device 6b according to the third embodiment.

### Description of Embodiments

Embodiments of the present invention are described below with reference to the accompanying drawings. In the following, the scope of the present invention is schematically described, mainly to the extent necessary to describe the relevant parts of the present invention to achieve the objects of the present invention, and the description is omitted where publicly known techniques are applied.

### First Embodiment

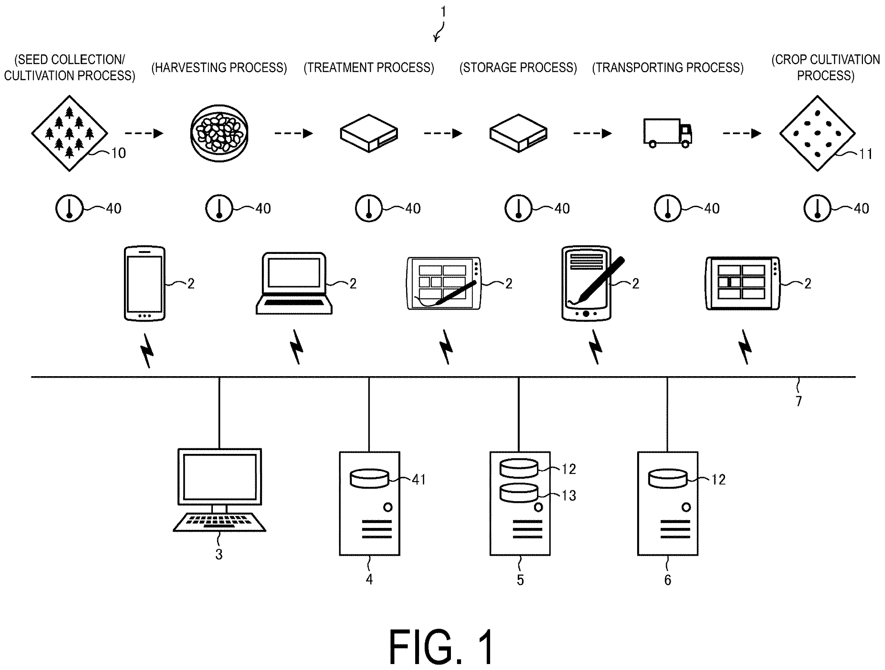

FIG. 1 is a diagram illustrating an example of a general configuration of a seed management system 1. The seed management system 1 functions as a system that manages a plant for seed collection from which seeds are collected and the seeds collected from the plant for seed collection, and that predicts the quality related to the germination or maturity of the seeds (hereinafter referred to as "the seed quality").

The plant for seed collection is a plant of any variety, and is, for example, mainly an edible plant such as a vegetable, fruit, cereal, or a mushroom, although it may also be fodder, ornamental or a textile plant. The plant for seed collection is collected and cultivated through a seed collection/cultivation process of cultivating the plant for seed collection in a predetermined seed collection/cultivation environment 10 for each variety.

The seed collection/cultivation environment 10 may be outdoor farmland, any indoor environment such as a plastic greenhouse or a plant factory, or an environment such as hydroponics where plants for seed collection are cultivated with water and liquid fertilizer, for example. The plant for seed collection is cultivated, for example, by sowing an original seed (or a seed of the original seed) into soil and supplying it with water and fertilizer, and mechanical agricultural equipment such as tractors and combine-harvesters, as well as hand-held farm equipment such as hoes and ploughs, are used for various agricultural tasks. In the seed collection/cultivation process, a management unit may be managed for each section of farmland, plastic greenhouse, plant factory and the like divided by a predetermined area, or may be collectively managed over the entirety of farmland, plastic greenhouse, plant factory and the like, or, may be managed by row or by plant, for example.

Seeds are collected from the plant for seed collection through seed collection/cultivation. The seeds are, for example, subjected to a harvesting process of harvesting seeds from the plant for seed collection, a treatment process of performing a predetermined process such as dosing and pellet treatment on seeds, a storage process of storing seeds in a predetermined storage environment, a transporting process of transporting seeds in a predetermined transport environment, and the like, and crops are cultivated through a crop cultivation process of cultivating crops from the seeds in a predetermined crop cultivation environment 11. Note that the order of the processes (treatment process, storage process, and transporting process) that are performed between the harvesting process and the crop cultivation process may be changed, and the processes may be performed multiple times.

As with the seed collection/cultivation environment 10, the crop cultivation environment 11 may be outdoor farmland or an indoor environment, or may be a hydroponics cultivation environment. Seeds are, for example, sown into the soil, supplied with water and fertilizer, and mechanical agricultural equipment such as tractors and combine-harvesters, as well as hand-held farm equipment such as hoes and ploughs, are used for various agricultural tasks. In the crop cultivation process, the management unit may be managed for each section of farmland, plastic greenhouse, plant factory and the like divided by a predetermined area, or may be collectively managed over the entirety of farmland, plastic greenhouse, plant factory and the like, or, may be managed by row or by plant, for example, as in the seed collection/cultivation process.

In the seed management system 1 according to the present embodiment, the seed quality is managed by predicting the seed quality (germination rate, healthy seedling rate and the like) of the seed to be predicted on the basis of the state of the plant for seed collection and the state of the seed as the seed management information about the seed to be predicted.

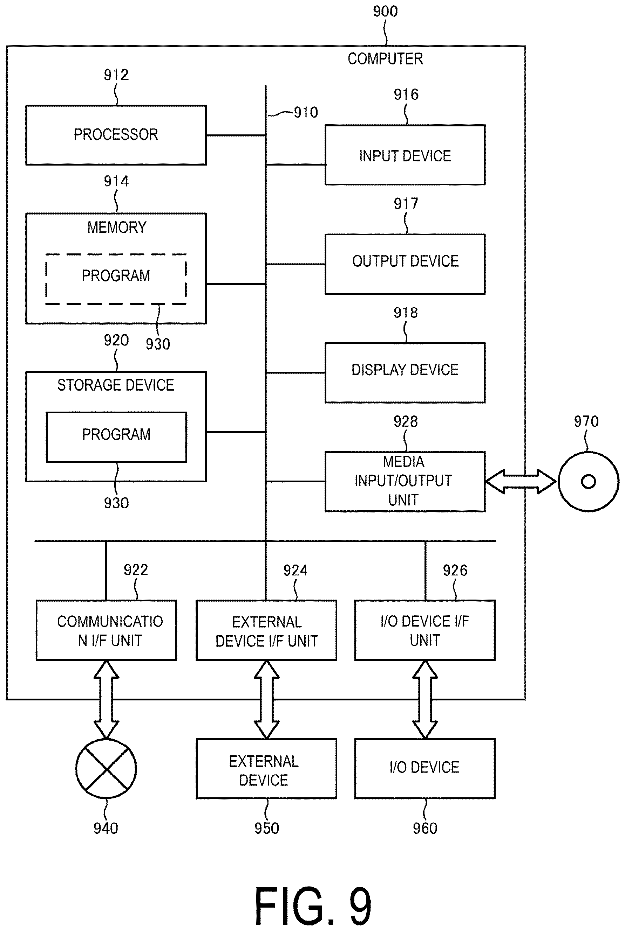

As illustrated in FIG. 1, the seed management system 1 includes, as its main components, an operator terminal device 2, a manager terminal device 3, a process management device 4, a machine learning device 5, and an information processing device 6. The devices 2 to 6 are each composed of a general-purpose or dedicated computer (see FIG. 9 described later), and connected to a wired or wireless network 7 so as to be able to mutually transmit and receive various data, for example. Note that the number of the devices 2 to 6 and the connection to the network 7 are not limited to the examples illustrated in FIG. 1, and may be changed as necessary.

The operator terminal device 2 is a terminal device used by the operator for the operation in each process (seed collection/cultivation process, harvesting process, treatment process, storage process, transporting process, and crop cultivation process), and may be a stationary device, or a mobile device. The operator terminal device 2 receives various input operations through a reader/writer and/or a display screen of an application program, a web browser or the like, and displays various information through the display screen, for example. The operator terminal device 2 is used to input the history of operations carried out by the operator in each process, results of visual confirmation, confirmation results obtained using various inspection kits and/or measuring equipment and the like, and to display the plant for seed collection, the state of the seed and the like.

The manager terminal device 3 is a terminal device used by a manager that manages the seed quality, and may be a stationary device, or a mobile device. The manager terminal device 3 receives various input operations through a reader/writer and/or a display screen of an application program, a web browser or the like, and displays various information through the display screen, for example. The manager terminal device 3 is used to input operation instructions and the like in each process by the manager, and to display the plant for seed collection and the state of the seed and the like.

The process management device 4 includes a sensor group 40 that is used in each process (seed collection/cultivation process, harvesting process, treatment process, storage process, transporting process, and crop cultivation process), and a seed management database 41 for managing the plant for seed collection and the state of the seed in each process. The detection location (which may be a plurality of locations) and the detection system of the sensor group 40 may be set as necessary in accordance with the parameter of detection object, and, for example, image sensors (cameras) may be used as the sensor group 40. In addition, the sensor group 40 may be disposed not only in the seed collection/cultivation environment 10 and the crop cultivation environment 11, but also in a surrounding environment (which may be a plurality of locations for different distances and different directions) separated from the seed collection/cultivation environment 10 and the crop cultivation environment 11 by a predetermined distance. Note that the process management device 4 may manage the seed collection/cultivation environment 10 at a plurality of locations.

The seed management information is registered in the seed management database 41 on the basis of the detection results of the sensor group 40, and the confirmation results and the operation history of each process input by the operator with the operator terminal device 2, for example. In addition, the seed quality information (historical value) is registered in the seed management database 41 on the basis of input results of the confirmation result of the seed quality (the historical values of the germination rate and the healthy seedling rate) in the crop cultivation process input by the operator with the operator terminal device 2, for example. Note that the seed management database 41 is described in detail later.

The machine learning device 5 is a device that operates as the subject of the learning phase of machine learning. The machine learning device 5 acquires various information registered in the seed management database 41 of the process management device 4 as training data 13, and generates through machine learning a learning model 12 to be used in the information processing device 6 on the basis of the training data 13, for example. The trained learning model 12 is provided to the information processing device 6 through the network 7, a recording medium and the like.

The information processing device 6 is a device that operates as the subject of an inference phase of machine learning. On the basis of the seed management information about the seed to be predicted, the information processing device 6 predicts the seed quality for the seed to be predicted by using the learning model 12 generated by the machine learning device 5. The seed quality information obtained as a result of the prediction is provided to the operator terminal device 2 and the manager terminal device 3, and presented to the operator and/or the manager, for example. In addition, the seed quality information is provided to the process management device 4 and stored in the seed management database 41.

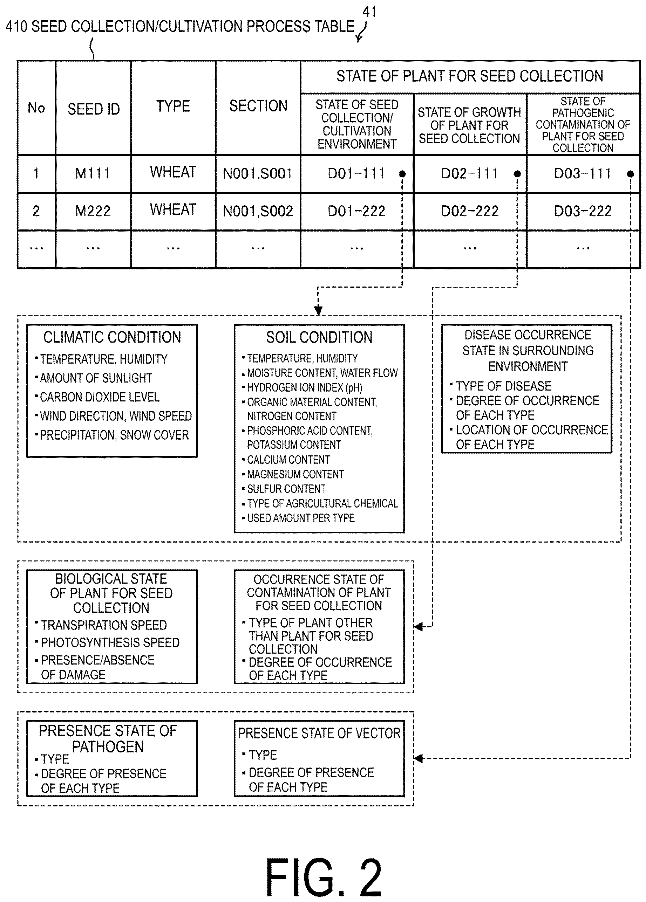

FIGS. 2 to 8 are diagrams illustrating examples of data configurations of tables 410 to 416 making up the seed management database 41. Note that while the acquired date and time of each information are also registered in the tables 410 to 416, the field related to the date and time is omitted in FIGS. 2 to 8.

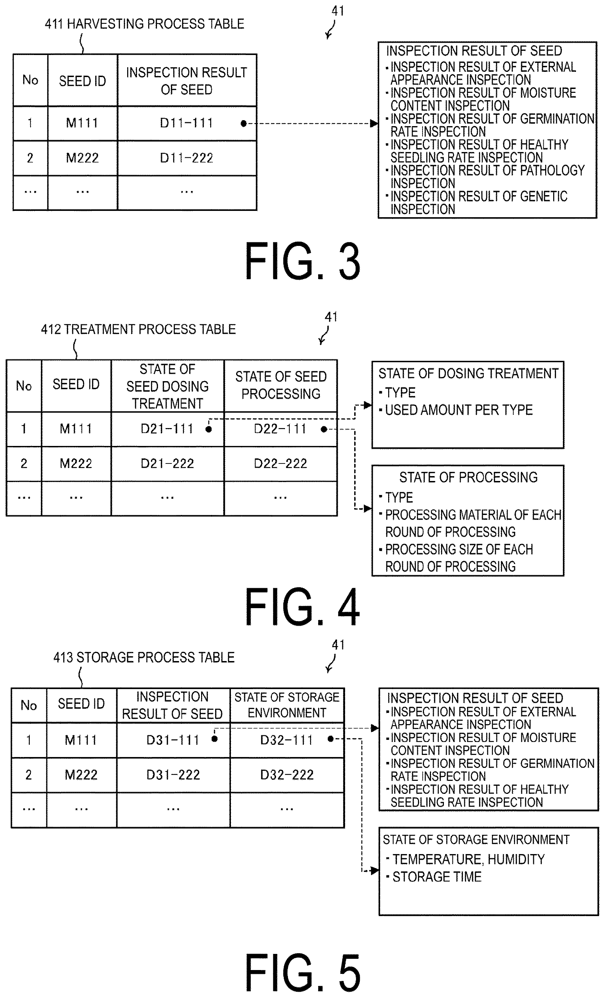

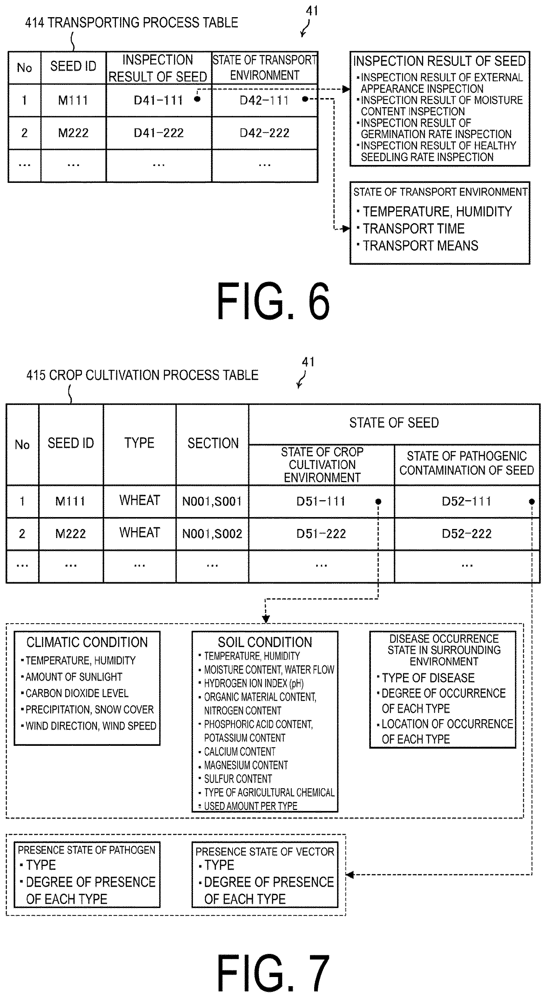

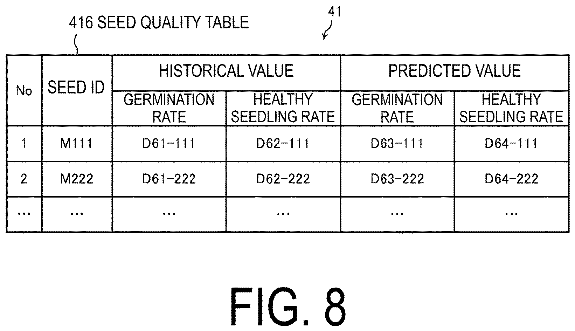

The seed management database 41 is a database that manages the seed management information including the state of the plant for seed collection and the state of the seed, and the seed quality information on the seed management unit basis. The seed management database 41 includes a seed collection/cultivation process table 410 (FIG. 2), a harvesting process table 411 (FIG. 3), a treatment process table 412 (FIG. 4), a storage process table 413 (FIG. 5), a transporting process table 414 (FIG. 6), a crop cultivation process table 415 (FIG. 7), and a seed quality table 416 (FIG. 8), and is managed on the basis of a seed ID for specifying the seed and the plant for seed collection, for example.

As illustrated in FIG. 2, the varieties of the plants for seed collection, the section (management unit), and the state of the plant for seed collection are registered in the seed collection/cultivation process table 410, for example. The state of the plant for seed collection includes at least one of the state of the seed collection/cultivation environment 10, the growth state of the plant for seed collection, and the state of pathogenic contamination of the plant for seed collection, for example.

The state of the seed collection/cultivation environment 10 includes at least one of the climatic condition of the seed collection/cultivation environment 10, the soil condition of the seed collection/cultivation environment 10, and the disease occurrence state in the surrounding environment of the seed collection/cultivation environment 107.

Examples of the climatic condition include the temperature, humidity, amount of sunlight, carbon dioxide level, wind direction, wind speed, precipitation, snow cover and the like of the seed collection/cultivation environment 10. In the seed collection/cultivation process table 410, detection results of a climatic sensor (the sensor group 40) that detects climatic conditions, and confirmation results of climatic conditions confirmed by the operator with measuring equipment are registered, for example. Note that as the climatic condition, climatic information about the seed collection/cultivation environment 10 provided from an external climatic information provision device (not illustrated in the drawing) may be registered.

Examples of the soil condition include the soil temperature, humidity, moisture content, water flow, hydrogen ion index (pH), organic material content, nitrogen content, phosphoric acid content, potassium content, calcium content, magnesium content, sulfur content, types of agricultural chemicals, and the used amount per type. In the seed collection/cultivation process table 410, detection results of a soil sensor (the sensor group 40) that detects soil conditions, and confirmation results of soil conditions confirmed by the operator with measuring equipment are registered, for example. Note that information about the component of the soil provided in the seed collection/cultivation environment 10 may be registered as the soil condition.

Examples of the disease occurrence state in the surrounding environment include the type of disease, the degree of occurrence of each type (such as the level and the number of individuals), and the location of occurrence of each type. The disease includes not only various diseases that adversely affect crops, but also those that cause various food incidents (such as food poisoning) that adversely affect the human body. In the seed collection/cultivation process table 410, confirmation results obtained by the operator through visual recognition or through confirmation of the occurrence state of the disease from the manager of the surrounding environment are registered, for example.

The growth state of the plant for seed collection includes at least one of the biological state of the plant for seed collection, and the occurrence state of contamination of the plant for seed collection.

Examples of the biological state include the transpiration speed, photosynthesis speed, presence/absence of damage and the like of the plant for seed collection. In the seed collection/cultivation process table 410, detection results of a biological sensor (the sensor group 40) that detects the biological state, and confirmation results of the biological state confirmed by the operator through visual recognition or with measuring equipment are registered, for example.

Examples of the occurrence state of contamination include the type of plants other than the plant for seed collection, and the degree of occurrence of each type (such as the level and the number of individuals). In the seed collection/cultivation process table 410, confirmation results of the occurrence state of contamination confirmed by the operator through visual recognition or with measuring equipment are registered, for example.

The state of pathogenic contamination of the plant for seed collection includes at least one of the presence state of the pathogen in the plant for seed collection, and the presence state of the vector organism that transmits the pathogen in the plant for seed collection.

Examples of the presence state of the pathogen include the type of the pathogen and the degree of presence of each type (such as the level and the number of individuals). Examples of the pathogen include disease-causing agents that may cause diseases (e.g., "pyricularia oryzae cavara" as a pathogen of wheat blast, "citrus mosaic virus" as a pathogen of canker sap, "diaporthe destruens" as a pathogen of sweet potato root rot, and the like), hazard-causing agents that may cause food incidents (e.g. salmonella, vibrio parahaemolyticus, staphylococcus aureus, listeria monocytogenes, campylobacter bacteria, enterohemorrhagic E. coli (e.g. o157), bacillus cereus, and bacillus uerschii), and contamination indicator materials (e.g., bacteria, viruses, allergens, viroids, molds, etc.) that may serve as indices to evaluate the contamination state of the plant for seed collection and the seed collection/cultivation environment 10. In the seed collection/cultivation process table 410, confirmation results of the type and degree of presence of the pathogen confirmed by the operator through visual recognition or with a pathogen inspection device (not illustrated in the drawing) composed of an inspection kit, measuring equipment and/or the like are registered, for example. The pathogen inspection device is a device that can inspect the type and degree of presence of the pathogen included in a sample that is at least one of the plant for seed collection, the soil where the plant for seed collection is cultivated, water supplied to the plant for seed collection, the fertilizer supplied to the plant for seed collection, the air, and the agricultural equipment used for work, for example. The pathogen inspection device may carry out any of morphological inspections, biochemical inspections, serological inspections and genetic inspections, or may carry out a combination of a plurality of inspection methods. An inspection kit for genetic inspections is for carrying out PCR inspections, inspection methods using DNA micro arrays, inspection methods using next-generation sequencers and the like.

Examples of the presence state of the vector organism include the type of the vector organism, and the degree of presence of each type (such as the level and the number of individuals). In the seed collection/cultivation process table 410, confirmation results of the presence state of a vector organism confirmed by the operator through visual recognition or with measuring equipment are registered, for example.

As illustrated in FIG. 3, in the harvesting process table 411, the inspection result of the seed in the harvesting process is registered as the state of the seed harvesting process, for example.

Examples of the inspection result of the seed in the harvesting process include inspection results of the external appearance inspection of the seed (such as color, size, and shape), inspection results of the moisture content inspection, inspection results of the germination rate inspection, inspection results of the healthy seedling rate inspection, the purity inspection of inspecting whether harvested seeds contain other varieties, inspection results of the pathology inspection, and inspection results of the genetic inspection. In the harvesting process table 411, inspection results of seed inspection carried out by the operator through visual recognition or with measuring equipment composed of an inspection kit and/or an inspection device are registered, for example.

As illustrated in FIG. 4, in the treatment process table 412, at least one of the state of the seed dosing treatment and the state of the seed processing treatment is registered as the state of the seed treatment process, for example.

Examples of the state of the dosing treatment include the type of medicine and the used amount per type in the dosing treatment performed on the seed. In the treatment process table 412, the operation history of the dosing treatment performed by the operator is registered, for example. Examples of the state of the processing treatment include the processing type, the processing material of each round of processing, the processing size and the like in the processing treatment such as pellet processing and film coating performed on the seed. In the treatment process table 412, the operation history of the processing treatment performed by the operator is registered, for example.

As illustrated in FIG. 5, in the storage process table 413, at least one of the inspection result of seeds in the storage process and the state of the seed storage environment is registered as the state of the seed storage process, for example.

Examples of the inspection results of seeds in the storage process include inspection results of the external appearance inspection of the seed, inspection results of the moisture content inspection, inspection results of the germination rate inspection, and inspection results of the healthy seedling rate inspection. In the storage process table 413, inspection results of seed inspection carried out by the operator through visual recognition or with measuring equipment composed of an inspection kit and/or an inspection device are registered, for example. Examples of the state of the storage environment include the temperature, humidity, and storage time of the storage environment. In the storage process table 413, detection results of a storage state detection sensor (the sensor group 40) that detects the state of the storage environment, and confirmation results of the state of the storage environment confirmed by the operator with measuring equipment are registered, for example.

As illustrated in FIG. 6, in the transporting process table 414, at least one of the inspection result of seeds in the transporting process and the state of the transport environment of seeds is registered as the state of the seed transporting process, for example.

Examples of the inspection results of seeds in the transporting process include inspection results of the external appearance inspection of the seed, inspection results of the moisture content inspection, inspection results of the germination rate inspection, and inspection results of the healthy seedling rate inspection. In the transporting process table 414, inspection results of seed inspection carried out by the operator through visual recognition or with measuring equipment composed of an inspection kit and/or an inspection device are registered, for example. Examples of the state of the transport environment include the temperature and humidity of the transport environment, transport time, and transportation means (such as ships, aircrafts, railroads, and automobiles). In the transporting process table 414, detection results of a transport state detection sensor (the sensor group 40) that detects the state of the transport environment, and confirmation results of the state of the transport environment confirmed by the operator with measuring equipment are registered, for example.

As illustrated in FIG. 7, in the crop cultivation process table 415, at least one of the state of the crop cultivation environment 11 and the state of the pathogenic contamination of seeds is registered as the state of the crop cultivation process of seeds, for example.

As with the state of the seed collection/cultivation environment 10, the state of the crop cultivation environment 11 includes at least one of the climatic condition of the crop cultivation environment 11, the soil condition of the crop cultivation environment 11, and the disease occurrence state in the surrounding environment of the crop cultivation environment 11.

Examples of the climatic condition include the temperature, humidity, amount of sunlight, carbon dioxide level, wind direction, wind speed, precipitation, snow cover and the like of the crop cultivation environment 11. In the crop cultivation process table 415, detection results of a climatic sensor (the sensor group 40) that detects climatic conditions, and confirmation results of climatic conditions confirmed by the operator with measuring equipment are registered, for example. Note that as the climatic condition, climatic information about the crop cultivation environment 11 provided from an external climatic information provision device (not illustrated in the drawing) may be registered.

Examples of the soil condition include the soil temperature, humidity, moisture content, water flow, hydrogen ion index (pH), organic material content, nitrogen content, phosphoric acid content, potassium content, calcium content, magnesium content, sulfur content, types of agricultural chemicals, and the used amount per type. In the crop cultivation process table 415, detection results of a soil sensor (the sensor group 40) that detects soil conditions, and confirmation results of soil conditions confirmed by the operator with measuring equipment are registered, for example. Note that information about the component of the soil provided in the crop cultivation environment 11 may be registered as the soil condition.

Examples of the disease occurrence state in the surrounding environment include the type of disease, the degree of occurrence of each type (such as the level and the number of individuals), and the location of occurrence of each type. In the crop cultivation process table 415, confirmation results obtained by the operator through visual recognition or through confirmation of the occurrence state of the disease from the manager of the surrounding environment are registered, for example.

As with the state of pathogenic contamination of the plant for seed collection, the state of the pathogenic contamination of seeds includes at least one of the presence state of the pathogen in seeds and the presence state of the vector organism that transmits the pathogen in seeds.

Examples of the presence state of the pathogen include the type of the pathogen and the degree of presence of each type (such as the level and the number of individuals). In the crop cultivation process table 415, confirmation results of the type and degree of presence of the pathogen confirmed by the operator through visual recognition or with a pathogen inspection device (not illustrated in the drawing) composed of an inspection kit, measuring equipment and/or the like are registered, for example. Examples of the presence state of the vector organism include the type of the vector organism, and the degree of presence of each type (such as the level and the number of individuals). In the crop cultivation process table 415, confirmation results of the presence state of a vector organism confirmed by the operator through visual recognition or with measuring equipment are registered, for example.

As illustrated in FIG. 8, in the seed quality table 416, at least one of the germination rate and the healthy seedling rate is registered as the seed quality, for example. In the seed quality table 416, the historical values of the germination rate and the healthy seedling rate that are inspection results of the germination rate inspection and the healthy seedling rate inspection performed in the crop cultivation process, and prediction values of the germination rate and the healthy seedling rate predicted by the information processing device 6 can be registered. Note that while the historical values of the germination rate and the healthy seedling rate need not be registered for all seeds, seeds of which historical values are registered can be used as the output data of the training data 13.

### Hardware Configuration of Each Device

FIG. 9 is a diagram illustrating an example of a hardware configuration of a computer 900. Each of the devices 2 to 6 of the seed management system 1 is composed of the general-purpose or dedicated computer 900.

As illustrated in FIG. 9, the computer 900 includes, as its main components, a bus 910, a processor 912, a memory 914, an input device 916, an output device 917, a display device 918, a storage device 920, a communication I/F (interface) unit 922, an external device I/F unit 924, an I/O (input and output) device I/F unit 926, and a media input/output part 928. Note that the above-mentioned components may be omitted as necessary in accordance with the application of the computer 900.

The processor 912 is composed of one or a plurality of computation processing devices (such as CPU (Central Processing Unit), MPU (Micro-processing unit), DSP (digital signal processor), and GPU (Graphics Processing Unit)) to operate as a control section that generally controls the entirety of the computer 900. The memory 914 is composed of a volatile memory (such as DRAM and SRAM) that stores various data and a program 930 and functions as a main memory, a nonvolatile memory (ROM), a flash memory, and the like, for example.

The input device 916 is composed of a keyboard, a mouse, numeric keys, an electric pen or the like, and functions as an input part, for example. The output device 917 is composed of a sound (voice) output device, a vibration device or the like, and functions as an output part, for example. The display device 918 is composed of a liquid crystal display, an organic EL display, an electronic paper, a projector or the like, and functions as an output part, for example. The input device 916 and the display device 918 may be integrally formed as a touch panel display. The storage device 920 is composed of an HDD (Hard Disk Drive), an SSD (Solid State Drive) or the like, and functions as a storage unit, for example. The storage device 920 stores various data required for executing operating systems and the program 930.

The communication I/F unit 922 is connected to a network 940 (which may be the same as the network 7 of FIG. 1) such as the Internet and an intranet in a wired or wireless manner, and functions as a communication unit that transmits and receives data to and from other computers in accordance with a predetermined communication standard. The external device I/F unit 924 is connected in a wired or wireless manner to an external device 950 such as a camera, a printer, a scanner, and a reader/writer, and functions as a communication unit that transmits and receives data to and from the external device 950 in accordance with a predetermined communication standard. The I/O device I/F unit 926 is connected to an I/O device 960 such as various sensors and actuators, and functions as a communication unit that transmits to and receives from the I/O device 960 data and various signals such as a detection signal of a sensor and a control signal to an actuator, for example. The media input/output part 928 is composed of a drive device such as a DVD (Digital Versatile Disc) drive or a CD (Compact Disc) drive, a memory card slot, or a USB connector, and reads and writes data from and to a medium (non-transitory storage medium) 970 such as a DVD, a CD, a memory card, or a USB memory.

In the computer 900 with the above-mentioned configuration, the processor 912 loads the program 930 stored in the storage device 920 into the memory 914 and executes it to control each unit of the computer 900 through the bus 910. Note that the program 930 may be stored in the memory 914 instead of the storage device 920. The program 930 may be stored in the media 970 in an installable file format or an executable file format, and provided to the computer 900 through the media input/output part 928. The program 930 may be provided to the computer 900 by downloading it via the network 940 through the communication I/F unit 922. In addition, the computer 900 may implement, with hardware such as FPGA and ASIC, various functions that are implemented by the processor 912 by executing the program 930.

The computer 900 is an electronic device with any forms composed of a stationary computer or a mobile computer, for example. The computer 900 may be a client-type computer, a server-type computer, or a cloud-type computer. The computer 900 may be applied to a device other than the devices 2 to 6.

### Machine Learning Device 5

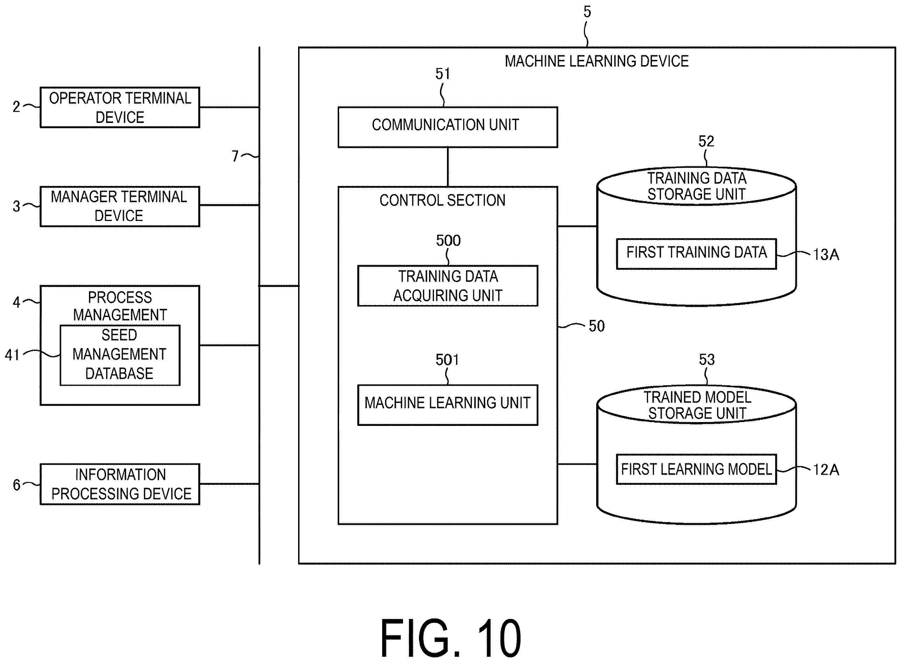

FIG. 10 is a block diagram illustrating an example of the machine learning device 5 according to the first embodiment. The machine learning device 5 includes a control section 50, a communication unit 51, a training data storage unit 52, and a trained model storage unit 53.

The control section 50 functions as a training data acquiring unit 500 and a machine learning unit 501. The communication unit 51 is connected to an external device through the network 7, and functions as a communication interface that transmits and receives various data.

The training data acquiring unit 500 is connected to an external device (e.g., the operator terminal device 2, the manager terminal device 3, the process management device 4 and the like) through the communication unit 51 and the network 7, and acquires first training data 13A composed of the seed management information as input data and the seed quality information as output data. The first training data 13A is data that is used as training data, verification data and test data in supervised learning. In addition, the seed quality information is data that is used as a correct label in supervised learning.

The training data storage unit 52 is a database that stores a plurality of sets of the first training data 13A acquired by the training data acquiring unit 500. Note that the specific configuration of the database making up the training data storage unit 52 may be configured as necessary.

The machine learning unit 501 performs machine learning by using a plurality of sets of the first training data 13A stored in the training data storage unit 52. Specifically, the machine learning unit 501 generates a trained first learning model 12A by inputting a plurality of sets of the first training data 13A to the first learning model 12A and teaching the first learning model 12A the correlation between the seed management information and the seed quality information included in the first training data 13A. When performing machine learning, the machine learning unit 501 may adopt any methods such as on-line learning, batch learning, and minibatch learning. Note that the machine learning unit 501 may perform a predetermined preprocessing on input data (the seed management information) input to the first learning model 12A, and may perform a predetermined post-processing on output data (the seed quality information) output from the first learning model 12A.

The trained model storage unit 53 is a database that stores the trained first learning model 12A (more specifically, an adjusted weight parameter group) generated by the machine learning unit 501. The trained first learning model 12A stored in the trained model storage unit 53 is provided to the actual system (e.g., the information processing device 6) through the network 7, the recording medium and the like. Note that while FIG. 10 illustrates the training data storage unit 52 and the trained model storage unit 53 as separate storage units, but they may be configured as a single storage unit.

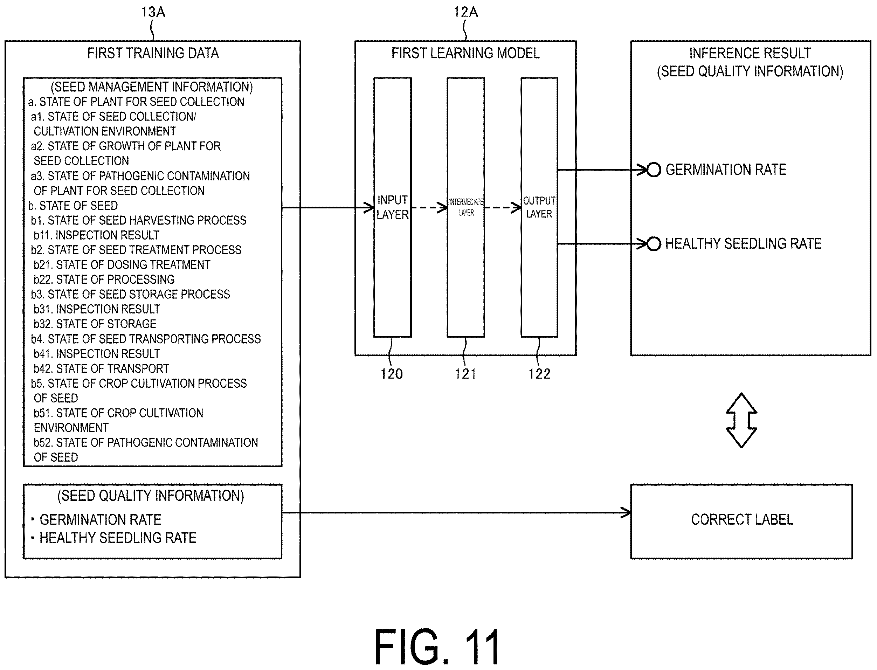

FIG. 11 is a diagram illustrating examples of the first learning model 12A and the first training data 13A in the case where the seed management information includes the state of the plant for seed collection and the state of the seed. The first training data 13A used for the machine learning of the first learning model 12A is composed of the seed management information including the state of the plant for seed collection and the state of the seed, and the seed quality information.

The seed management information making up the first training data 13A includes the state of the plant for seed collection from which seeds being the training object are collected, and the state of the seeds.

The state of the plant for seed collection includes at least one of the state of the seed collection/cultivation environment 10, the growth state of the plant for seed collection, and the state of pathogenic contamination of the plant for seed collection, and corresponds to the information registered in the seed collection/cultivation process table 410, for example.

The state of the seed collection/cultivation environment 10 includes at least one of the climatic condition of the seed collection/cultivation environment 10 (temperature, humidity, amount of sunlight, carbon dioxide level, wind direction, wind speed, precipitation, snow cover and the like), the soil condition of the seed collection/cultivation environment 10 (temperature, humidity, moisture content, water flow, hydrogen ion index (pH), organic material content, nitrogen content, phosphoric acid content, potassium content, calcium content, magnesium content, sulfur content, types of agricultural chemicals, the used amount per type and the like), and the disease occurrence state in the surrounding environment of the seed collection/cultivation environment 107 (the type of disease, the degree of occurrence of each type, and the location of occurrence of each type). The growth state of the plant for seed collection includes at least one of the biological state of the plant for seed collection (transpiration speed, photosynthesis speed, presence/absence of damage and the like), and the occurrence state of contamination of the plant for seed collection (the type of plants other than the plant for seed collection, the degree of occurrence of each type and the like). The state of pathogenic contamination of the plant for seed collection includes at least one of the presence state of the pathogen in the plant for seed collection (the type, the degree of presence of each type and the like), and the presence state of the vector organism that transmits the pathogen in the plant for seed collection (the type, the degree of presence of each type and the like).

The state of the seed includes at least one of the state of the seed harvesting process, the state of the seed treatment process, the state of the seed storage process, the state of the seed transporting process, and the state of the seed cultivation process, which correspond to information registered in the harvesting process table 411, the treatment process table 412, the storage process table 413, the transporting process table 414, and the crop cultivation process table 415, respectively.

The state of the harvesting process includes inspection results of the seed in the harvesting process (inspection results of the external appearance inspection, the moisture content inspection, the germination rate inspection, the healthy seedling rate inspection, and the purity inspection of inspecting whether harvested seeds contain other varieties, the pathology inspection, the genetic inspection and the like). The state of the treatment process includes at least one of the state of the seed dosing treatment (the medicine type, the used amount per type and the like), and the state of the seed processing treatment (the processing type, the processing material of each round of processing, and the processing size). The state of the storage process includes at least one of the inspection result of seeds in the storage process (inspection results of the external appearance inspection, the moisture content inspection, the germination rate inspection, the healthy seedling rate inspection and the like), and the state of the seed storage environment (temperature, humidity, storage time and the like). The state of the transporting process includes at least one of the inspection result of seeds in the transporting process (inspection results of the external appearance inspection, the moisture content inspection, the germination rate inspection, the healthy seedling rate inspection and the like), and the state of the transport environment of seeds (temperature, humidity, transport time, transportation means and the like). The state of the crop cultivation process includes at least one of the state of the crop cultivation environment 11 of seeds, and the state of the pathogenic contamination of seeds. The state of the crop cultivation environment 11 includes at least one of the climatic condition of the crop cultivation environment 11 (temperature, humidity, amount of sunlight, carbon dioxide level, wind direction, wind speed, precipitation, snow cover and the like), the soil condition of the crop cultivation environment 11 (temperature, humidity, moisture content, water flow, hydrogen ion index (pH), organic material content, nitrogen content, phosphoric acid content, potassium content, calcium content, magnesium content, sulfur content, types of agricultural chemicals, the used amount per type and the like), and the disease occurrence state in the surrounding environment of the crop cultivation environment 11 (the type of disease, the degree of occurrence of each type, and the location of occurrence of each type). The state of the pathogenic contamination of seeds includes at least one of the presence state of the pathogen in seeds (the type, the degree of presence of each type and the like), and the presence state of the vector organism that transmits the pathogen in seeds (the type, the degree of presence of each type and the like).

Note that the inspection results of the germination rate inspection and the healthy seedling rate inspection included in the states of the harvesting process, the storage process and the transporting process are results that are obtained with the germination rate and healthy seedling rate of seeds at the time of the inspection as the input data. Therefore, the germination rate and healthy seedling rate obtained as inspection results here, and the germination rate and healthy seedling rate indicated by the seed quality information making up the first training data 13A represent the quality of seeds at different time points.

The seed quality information making up the first training data 13A is information indicating the seed quality regarding the germination or maturity of the seed being the training object. The seed quality information includes at least one of the germination rate and healthy seedling rate of seeds being the training object, and corresponds to information (historical value) registered in the seed quality table 416, for example. The germination rate and the healthy seedling rate are represented by a step value or a continuous value, and may be values normalized to a predetermined range (e.g., 0 to 1) in the case of the continuous value.

Note that the state of the plant for seed collection and the state of the seed included in the seed management information may be a time point data that indicates a state at a predetermined time point, time-series data composed of a plurality of pieces of time point data at a predetermined time interval (hourly, daily, weekly, monthly, and the like), or representative data representing a representative value (average value, maximum value, minimum value and the like) of a plurality of pieces of time point data included in a predetermined period. The definition of the seed management information may be changed as necessary, and in that case, it suffices to appropriately change the data configuration of the input data in the first learning model 12A and the first training data 13A.

In addition, the seed quality information needs only to indicate the seed quality related to germination or maturity, and one of germination rate and healthy seedling rate may be omitted, and other states may be included. The definition of the seed quality information may be changed as necessary, and in that case, it suffices to appropriately change the data configuration of the output data in the first training data 13A and the first learning model 12A.

The training data acquiring unit 500 acquires the first training data 13A by referring to various information registered in the seed management database 41, and/or receiving the input operation of the manager from the manager terminal device 3. When referring to the seed management database 41, the training data acquiring unit 500 acquires the first training data 13A by acquiring the state of the plant for seed collection, the state of the seed, and the historical value of the seed quality associated with the specific seed ID in the tables 410 to 416, for example.

The first learning model 12A employs a structure of neural network, and includes an input layer 120, an intermediate layer 121, and an output layer 122, for example. Synapses (not illustrated in the drawing) connecting respective neurons are provided between the layers, and each synapse is associated with a weight. The weight parameter group composed of the weights of the synapses is adjusted through machine learning.

The input layer 120 includes a number of neurons in accordance with the seed management information as input data, and each value of the seed management information is input to each neuron. The output layer 122 includes a number of neurons in accordance with the seed quality information as output data, and the prediction result (inference result) of the seed quality information for the seed management information is output as output data. In the case where the first learning model 12A is composed of a regression model, each seed quality information is output as a numerical value normalized to a predetermined range (e.g., 0 to 1). In addition, in the case where the first learning model 12A is composed of a classification model, the seed quality information is output as a numerical value normalized to a predetermined range (e.g., 0 to 1) as a score (accuracy) for each class.

The machine learning unit 501 generates the trained first learning model 12A by inputting a plurality of sets of the first training data 13A to the first learning model 12A and teaching the first learning model 12A the correlation between the seed management information and the seed quality information included in the first training data 13A.

Note that while, in the present embodiment, the above-described data configurations of the first learning model 12A and the first training data 13A are configured as illustrated in FIG. 11, it is also possible to adopt a plurality of data configurations with different conditions such as the method of the machine learning, the varieties of seeds, the type of data included in the seed management information, and the type of data included in the seed quality information, for example. In that case, the training data acquiring unit 500 may acquire a plurality of types of training data corresponding to a plurality of data configurations with different conditions, and the machine learning unit 501 may perform machine learning by using that training data.

### Machine Learning Method

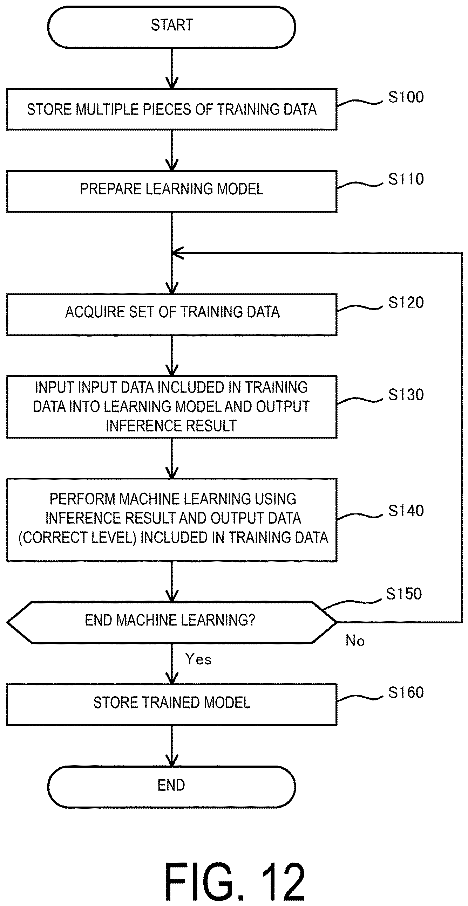

FIG. 12 is a flowchart illustrating an example of a machine learning method of the machine learning device 5. Note that the following describes a case where the first learning model 12A is generated as the learning model 12 by using the first training data 13A as the training data 13.

First, at step S 100, as preliminary preparation for starting machine learning, the training data acquiring unit 500 acquires a desired amount of the training data 13, and stores the acquired training data 13 in the training data storage unit 52. The amount of the training data 13 prepared here may be set in consideration of the inference accuracy required for the finally obtained learning model 12.

Next, at step S110, the machine learning unit 501 prepares the pre-training learning model 12 to start machine learning. The pre-training learning model 12 prepared here is composed of the neural network model exemplified in FIG. 11, and the weight of each synapse is set to the initial value.

Next, at step S120, the machine learning unit 501 randomly acquires a set of the training data 13 from a plurality of sets of the training data 13 stored in the training data storage unit 52, for example.

Next, at step S130, the machine learning unit 501 inputs the seed management information (input data) included in the set of training data 13 into the input layer 120 of the prepared pre-training (or in-training) learning model 12. As a result, the seed quality information (output data) is output as an inference result from the output layer 122 of the learning model 12, but this output data is generated by the pre-training (or in-training) learning model 12. Therefore, in the state before training (or during training), the output data output as an inference result indicates information different from the seed quality information (correct label) included in the training data 13.

Next, at step S140, the machine learning unit 501 performs machine learning by performing a process (backpropagation) of adjusting the weight of each synapse by comparing the seed quality information (correct label) included in the set of training data 13 acquired at step S120, and the seed quality information (output data) that is output as an inference result from the output layer at step S130. In this manner, the machine learning unit 501 teaches the learning model 12 the correlation between the seed management information and the seed quality information.

Next, at step S150, the machine learning unit 501 determines whether a predetermined learning termination condition is satisfied on the basis of evaluation values based on the seed quality information (correct label) included in the training data 13 and the seed quality information (output data) output as an inference result, and the remaining amount of training data 13 stored in the training data storage unit 52 that has not yet been used for training, for example.

At step S150, when the machine learning unit 501 determines that the learning termination condition is not satisfied, and that the machine learning is to be continued (No at step S150), the process is returned to step S120, and the processes of steps S120 to S 140 are performed multiple times for the in-training learning model 12 by using the training data 13 that has not been used yet for training. On the other hand, at step S150, when the learning termination condition is satisfied and the machine learning unit 501 determines that the machine learning is to be completed (Yes at step S150), the process proceeds to step S160.

Then, at step S160, the machine learning unit 501 stores in the trained model storage unit 53 the trained learning model 12 (adjusted weight parameter group) generated by adjusting the weight associated with each synapse, and terminates the series of machine learning methods illustrated in FIG. 12. In the machine learning method, step S100 corresponds to the training data storage process, steps S 110 to S 150 correspond to the machine learning process, and step S160 corresponds to the trained model storage process.

In this manner, the information processing device 6 and the information processing method according to the present embodiment can provide the first learning model 12A that can predict (infer), from the seed management information about the seed collected from the plant for seed collection, the seed quality information for that seed.

### Information Processing Device 6

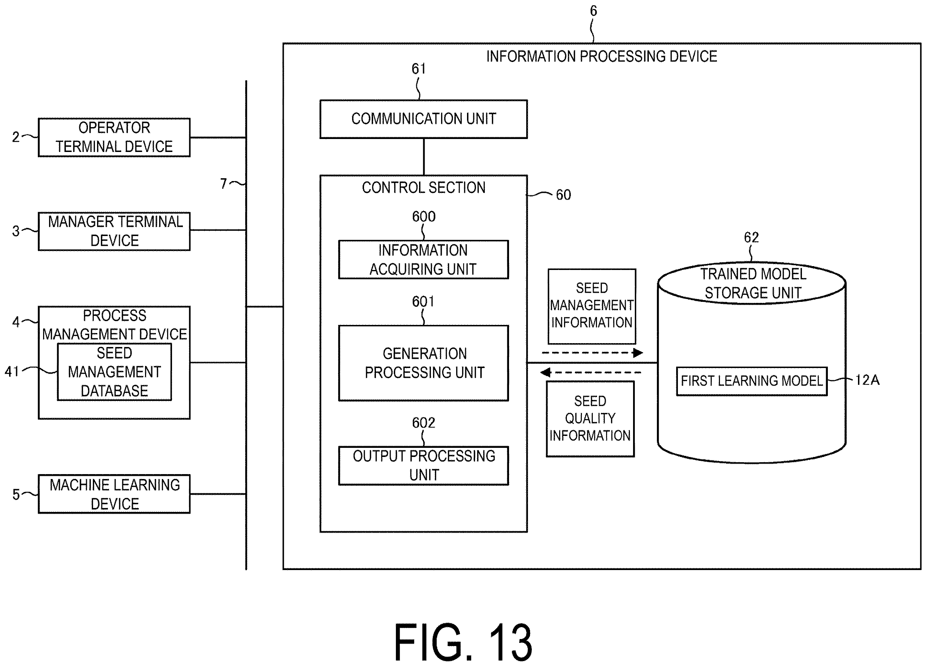

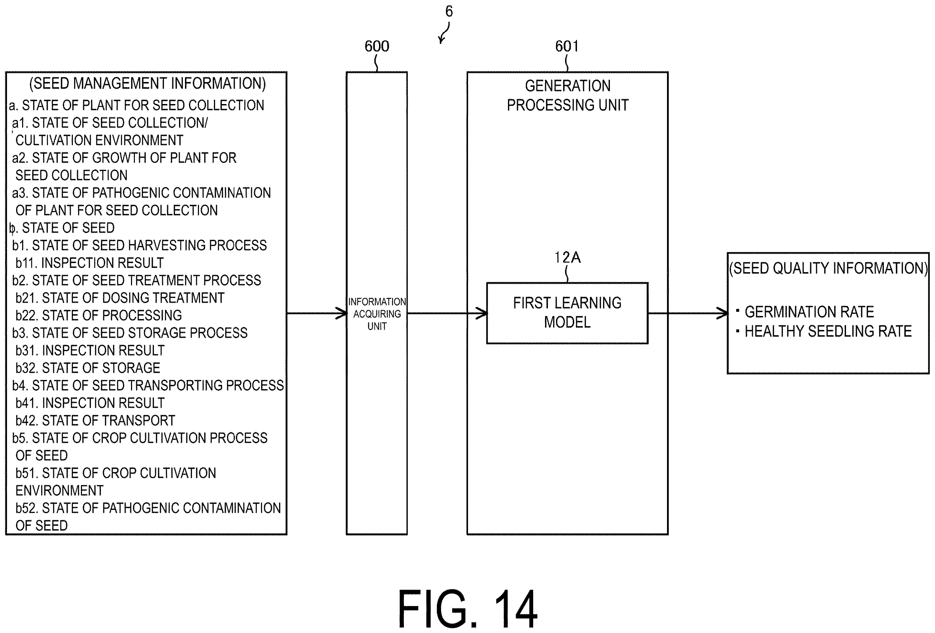

FIG. 13 is a block diagram illustrating an example of the information processing device 6 according to the first embodiment. FIG. 14 is a diagram illustrating an example of a function of the information processing device 6 according to the first embodiment. The information processing device 6 includes a control section 60, a communication unit 61, and a trained model storage unit 62.

The control section 60 functions as an information acquiring unit 600, a generation processing unit 601 and an output processing unit 602. The communication unit 61 is connected to an external device through the network 7, and functions as a communication interface that transmits and receives various data.

The information acquiring unit 600 is connected to an external device (e.g., the operator terminal device 2, the manager terminal device 3, the process management device 4 and the like) through the communication unit 61 and the network 7, and acquires, as the seed management information about the seed to be predicted, the state of the plant for seed collection from which the seed is collected, and the state of the seed.

For example, by referring to the seed management database 41, the information acquiring unit 600 acquires, as the seed management information, the detection results of the sensor group 40, the operation history of the operator, results of visual confirmation, confirmation results obtained using various inspection kits and/or measuring equipment and the like in each process (seed collection/cultivation process, harvesting process, treatment process, storage process, transporting process, and crop cultivation process) performed on the seed to be predicted. More specifically, the information acquiring unit 600 acquires the state of the plant for seed collection from the seed collection/cultivation process table 410, and acquires the state of the seed from the harvesting process table 411, the treatment process table 412, the storage process table 413, the transporting process table 414, and the crop cultivation process table 415. Then, the information acquiring unit 600 acquires the seed management information in accordance with the data configuration of the input data in the first learning model 12A.

In the above-described manner, the generation processing unit 601 generates the seed quality information for the seed, on the basis of the seed quality information that is output by inputting, into the first learning model 12A as input data, the seed management information about the seed to be predicted acquired by the information acquiring unit 600. More specifically, the generation processing unit 601 generates the seed quality information including the germination rate and the healthy seedling rate, by inputting the seed management information into the first learning model 12A. Note that the generation processing unit 601 may perform a predetermined preprocessing on input data (the seed management information) input to the first learning model 12A, and may perform a predetermined post-processing on output data (the seed quality information) output from the first learning model 12A.

The trained model storage unit 62 is a database that stores the trained first learning model 12A to be used in the generation processing unit 601. Note that the number of the first learning models 12A stored in the trained model storage unit 62 is not limited to the above-mentioned example, and a plurality of trained models with different conditions such as the method of the machine learning, the varieties of seeds, the type of data included in the seed management information, and the type of data included in the seed quality information may be stored, and selectively used, for example. In addition, the trained model storage unit 62 may be substituted by a storage unit of an external computer (e.g., server type computers and cloud type computers), and in that case, the generation processing unit 601 may access the external computer.

The output processing unit 602 performs an output process for outputting the seed quality information generated by the generation processing unit 601. For example, the output processing unit 602 may transmit that seed quality information to the manager terminal device 3 such that a display screen based on that seed quality information is displayed on the manager terminal device 3, and may transmit that seed quality information to the process management device 4 such that that seed quality information is registered in the seed management database 41 as a prediction value of the seed quality table 416.

### Information Processing Method

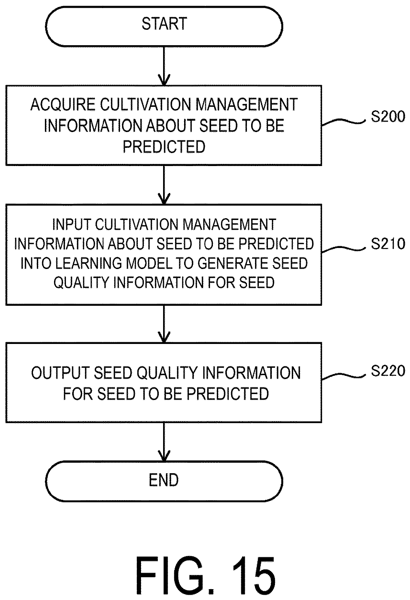

FIG. 15 is a flowchart illustrating an example of an information processing method of the information processing device 6. The following describes a case where the first training data 13A is used as the training data 13 and the first learning model 12A is generated as the learning model 12.

First, at step S200, the information acquiring unit 600 of the information processing device 6 receives the seed ID for specifying the seed to be predicted from the manager terminal device 3, for example. Then, by referring to the seed management database 41 on the basis of the seed ID, the information acquiring unit 600 acquires, as the seed management information about the seed to be predicted, the state of the plant for seed collection from which the seed is collected, and the state of the seed.

Next, at step S210, by inputting the seed management information acquired at step S200 into the learning model 12, the generation processing unit 601 generates the seed quality information for that seed management information as output data.

Next, at step S220, as an output process for outputting the seed quality information generated at step S210, the output processing unit 602 transmits that seed quality information to the manager terminal device 3. Then, the manager terminal device 3 displays a display screen based on that seed quality information, and thus the seed quality information about that seed is presented to the manager. Note that the destination of the seed quality information may be the process management device 4 in addition to or instead of the manager terminal device 3. In the above-described information processing method, step S200 corresponds to the information acquisition process, step S210 corresponds to generation treatment process, and step S220 corresponds to the output treatment process.

As described above, according to the information processing device 6 and the information processing method according to the present embodiment, the germination rate and healthy seedling rate of that seed are predicted as the seed quality information for the seed to be predicted, by inputting the seed management information about the seed to be predicted into the first learning model 12A. Thus, the seed quality can be easily predicted.

### Second Embodiment

The second embodiment differs from the first embodiment in that the seed management information about the training object and the seed to be predicted includes only the state of the plant for seed collection. The following mainly describes differences from the first embodiment regarding a machine learning device 5a and an information processing device 6a according to the second embodiment.

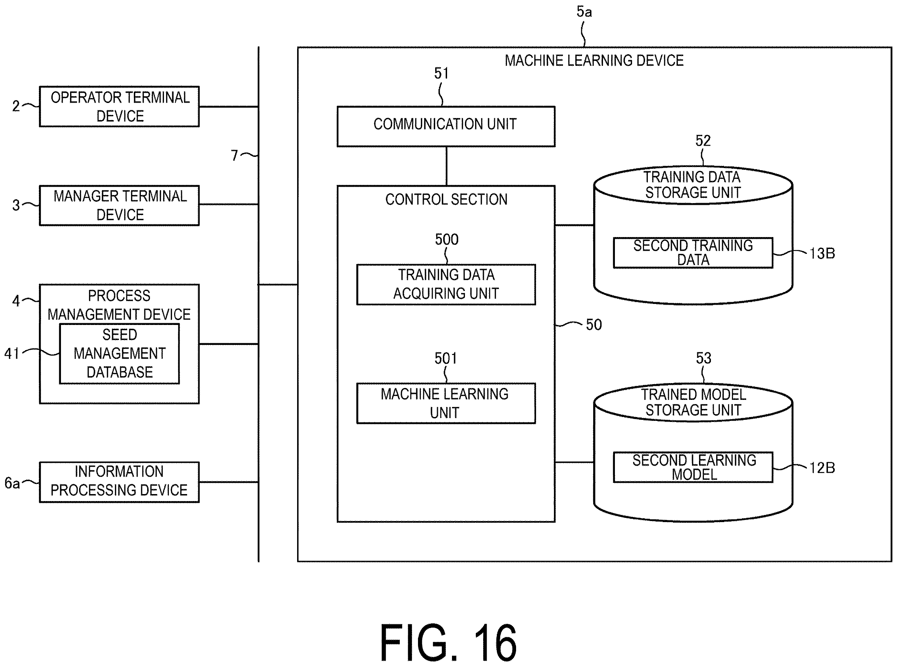

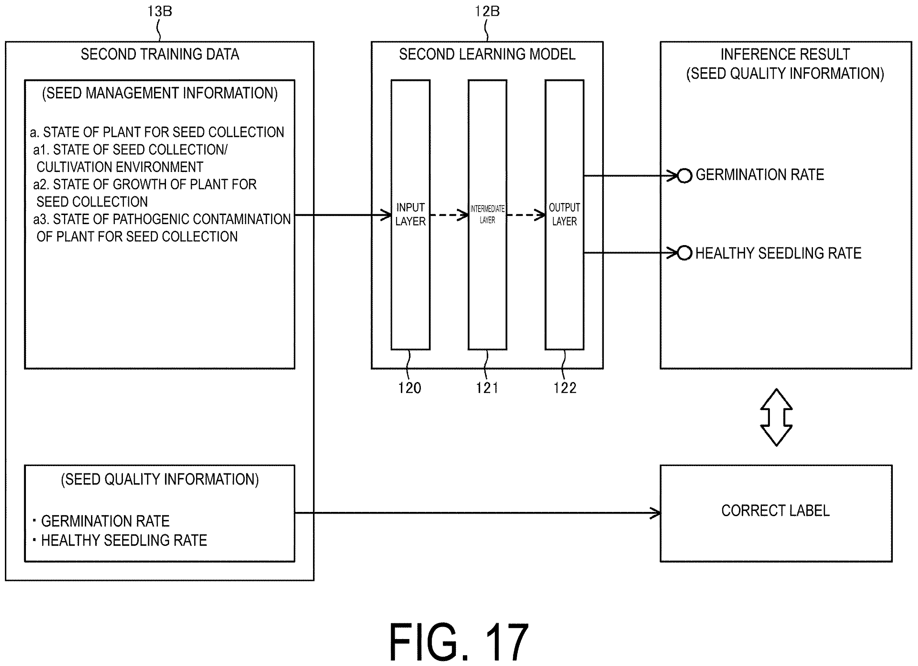

FIG. 16 is a block diagram illustrating an example of the machine learning device 5a according to the second embodiment. FIG. 17 is a diagram illustrating an example of a second learning model 12B and second training data 13B according to the second embodiment. The second training data 13B used for the machine learning of the second learning model 12B is composed of the seed management information including the state of the plant for seed collection, and the seed quality information.

The seed management information making up the second training data 13B includes the state of the plant for seed collection from which seeds being the training object are collected. The state of the plant for seed collection is the same as that of the first embodiment, and therefore the description thereof is omitted.

The seed quality information making up the second training data 13B indicates the seed quality related to the germination or maturity of the seed being the training object, and includes the germination rate and healthy seedling rate of seeds being the training object, for example. The germination rate and the healthy seedling rate are the same as those of the first embodiment, and therefore the description thereof is omitted.

The training data acquiring unit 500 acquires the second training data 13B by referring to various information registered in the seed management database 41, and/or receiving the input operation of the manager from the manager terminal device 3. When referring to the seed management database 41, the training data acquiring unit 500 acquires the second training data 13B by acquiring the historical value of the seed quality and the state of the plant for seed collection associated with the specific seed ID in the seed collection/cultivation process table 410 and the seed quality table 416, for example.

The machine learning unit 501 generates the trained second learning model 12B by inputting a plurality of sets of the second training data 13B into the second learning model 12B so as to teach the second learning model 12B the correlation between the seed management information and the seed quality information included in the second training data 13B.

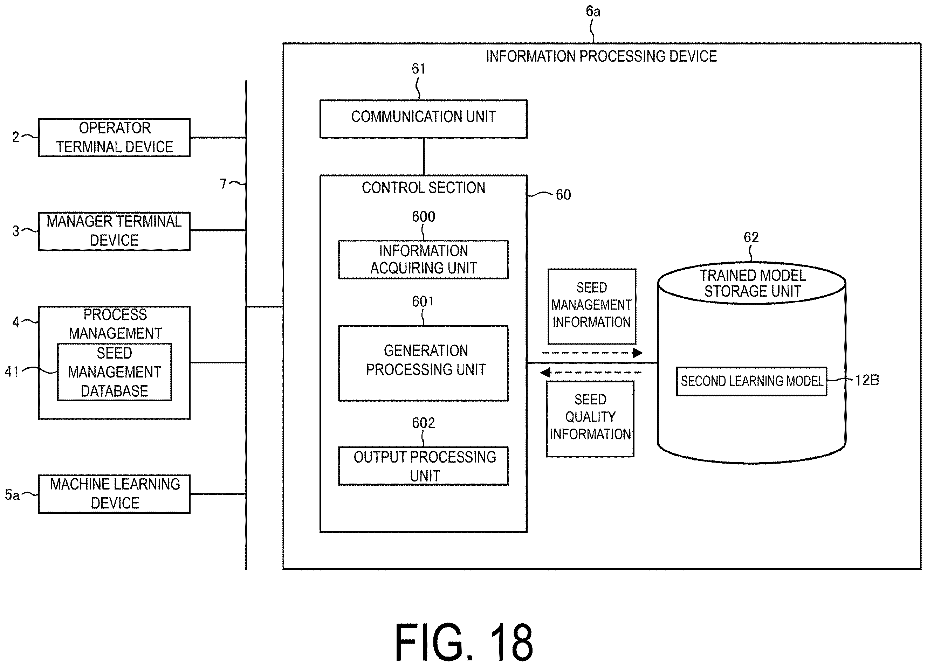

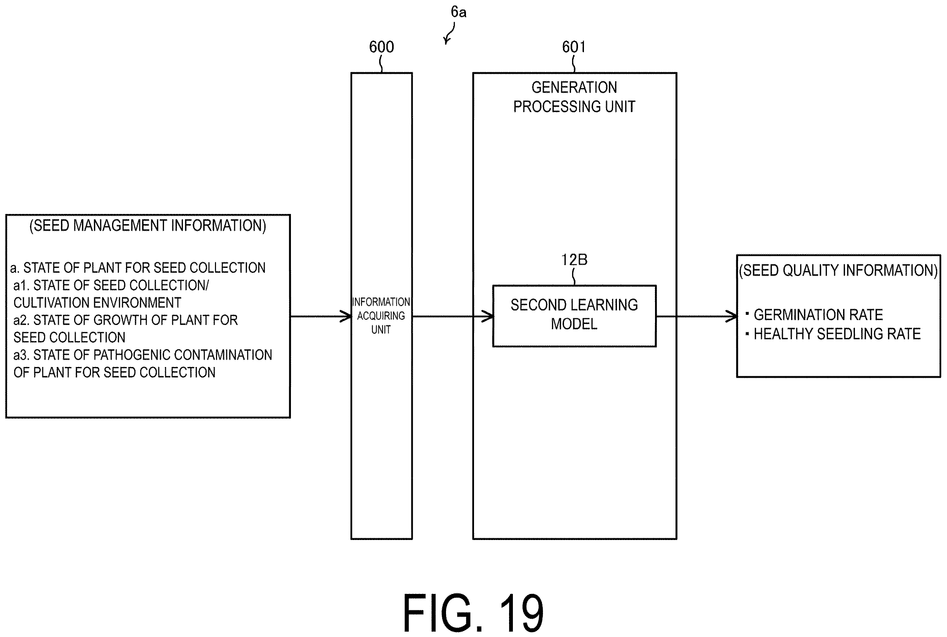

FIG. 18 is a block diagram illustrating an example of the information processing device 6a according to the second embodiment. FIG. 19 is a diagram illustrating an example of a function of the information processing device 6a according to the second embodiment.

The information acquiring unit 600 acquires the state of the plant for seed collection from which seeds are collected as the seed management information about the seed to be predicted. For example, by referring to the seed management database 41, the information acquiring unit 600 acquires, as the seed management information, the detection results of the sensor group 40, the operation history of the operator, results of visual confirmation, confirmation results obtained using various inspection kits and/or measuring equipment and the like of the seed collection/cultivation process performed on the seed to be predicted. More specifically, the information acquiring unit 600 acquires the state of the plant for seed collection from the seed collection/cultivation process table 410 in accordance with the data configuration of the input data at the second learning model 12B.

In the above-described manner, the generation processing unit 601 generates the seed quality information for the seed, on the basis of the seed quality information that is output by inputting, into the second learning model 12B as input data, the seed management information about the seed to be predicted acquired by the information acquiring unit 600.

As described above, according to the information processing device 6a and the information processing method according to the present embodiment, the germination rate and healthy seedling rate of that seed are predicted as the seed quality information for the seed to be predicted, by inputting the seed management information about the seed to be predicted into the second learning model 12B. The seed management information according to the present embodiment includes only the state of the plant for seed collection, and thus can easily predict the quality of the seeds collected from the plant for seed collection in the phase of cultivating the plant for seed collection.

### Third Embodiment

The third embodiment differs from the first embodiment in that the seed management information about the training object and the seed to be predicted include only the state of the seed. The following mainly describes differences from the first embodiment regarding a machine learning device 5b and an information processing device 6b according to the third embodiment.

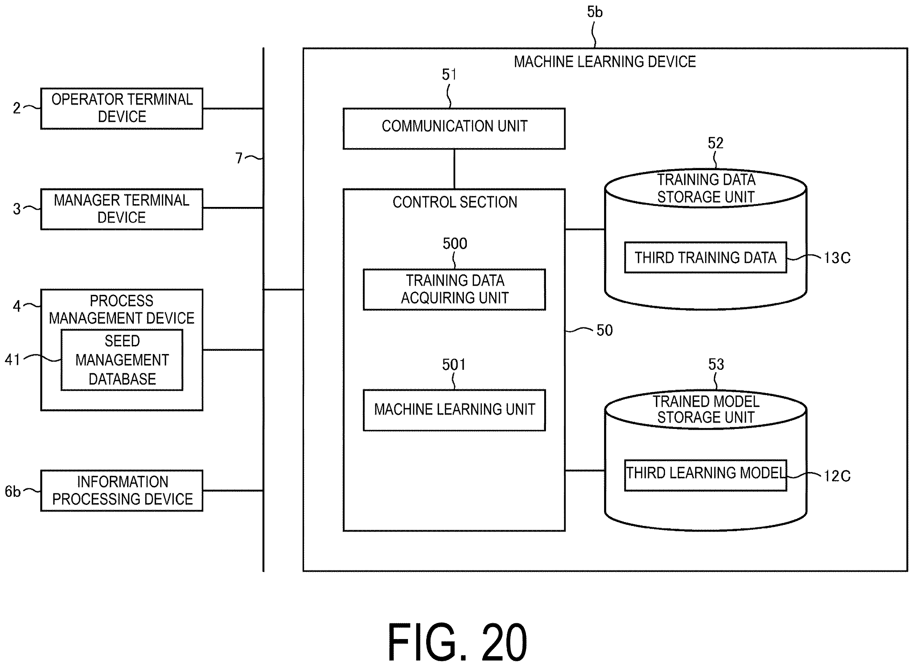

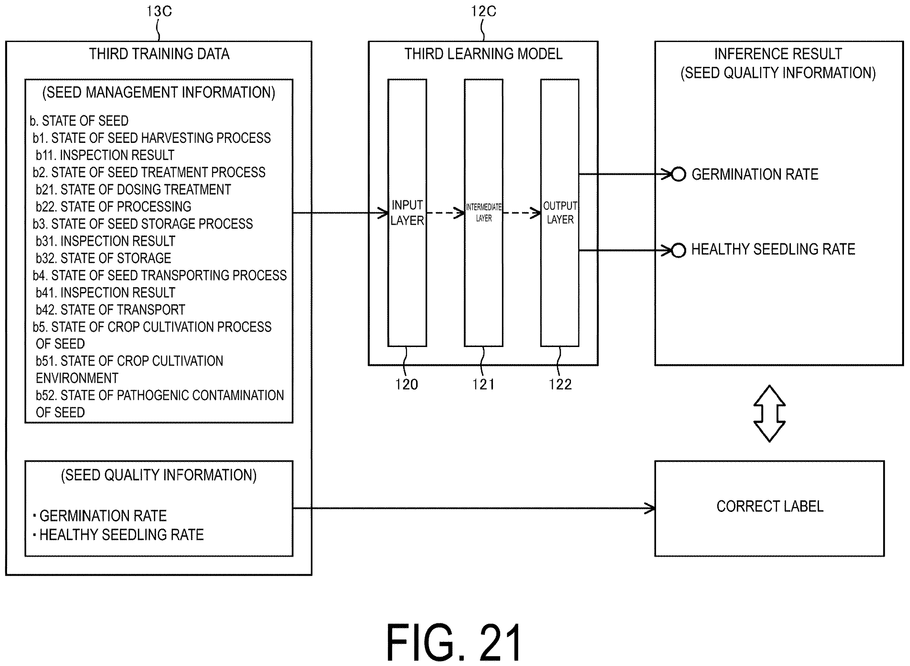

FIG. 20 is a block diagram illustrating an example of the machine learning device 5b according to the third embodiment. FIG. 21 is a diagram illustrating an example of a third learning model 12C and third training data 13C according to the third embodiment. The third training data 13C used for the machine learning of the third learning model 12C is composed of the seed management information including the state of the seed, and the seed quality information.

The seed management information making up the third training data 13C includes the state of the seed being the training object. The state of the seed is the same as that of the first embodiment, and therefore the description thereof is omitted.

The seed quality information making up the third training data 13C indicates the seed quality related to the germination or maturity of the seed being the training object, and includes the germination rate and healthy seedling rate of seeds being the training object, for example. The germination rate and the healthy seedling rate are the same as those of the first embodiment, and therefore the description thereof is omitted.

The training data acquiring unit 500 acquires the third training data 13C by referring to various information registered in the seed management database 41, and/or receiving the input operation of the manager from the manager terminal device 3. When referring to the seed management database 41, the training data acquiring unit 500 acquires the third training data 13C by acquiring the historical value of the seed quality and the state of the seed associated with the specific seed ID in the harvesting process table 411, the treatment process table 412, the storage process table 413, the transporting process table 414, the crop cultivation process table 415, and the seed quality table 416, for example.

The machine learning unit 501 generates the trained third learning model 12C by inputting a plurality of sets of the third training data 13C into the third learning model 12C so as to teach the third learning model 12C the correlation between the seed management information and the seed quality information included in the third training data 13C.

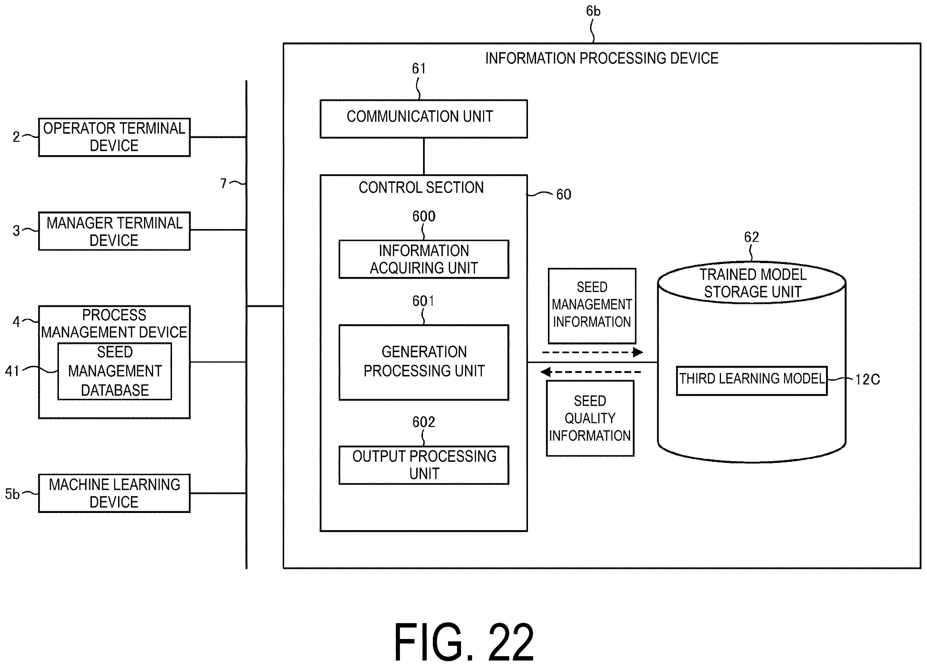

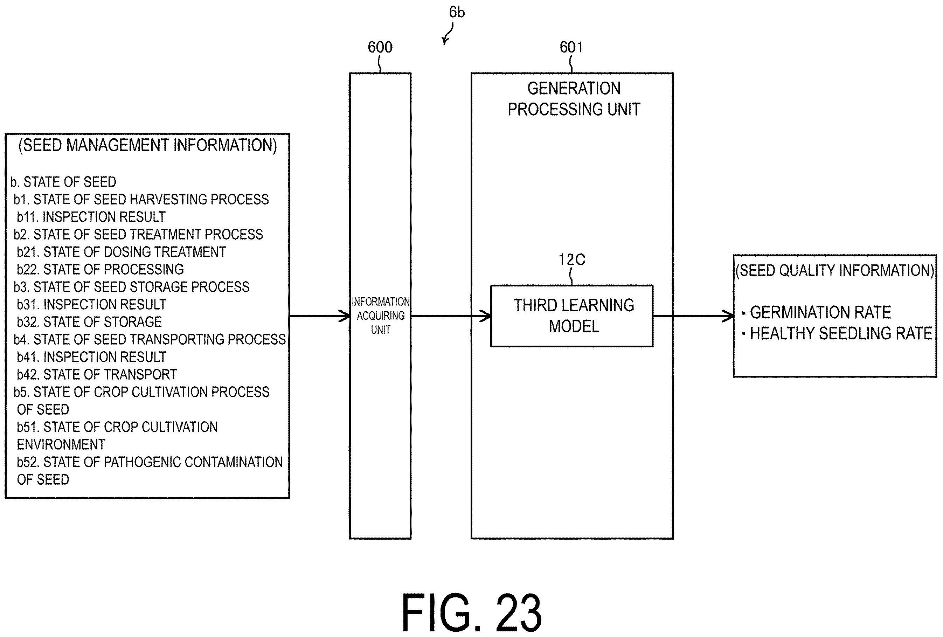

FIG. 22 is a block diagram illustrating an example of the information processing device 6b according to the third embodiment. FIG. 23 is a diagram illustrating an example of a function of the information processing device 6b according to the third embodiment.

The information acquiring unit 600 acquires the state of the seed as the seed management information about the seed to be predicted. For example, by referring to the seed management database 41, the information acquiring unit 600 acquires, as the seed management information, the detection results of the sensor group 40, the operation history of the operator, results of visual confirmation, confirmation results obtained using various inspection kits and/or measuring equipment and the like of the seed collection/cultivation process performed on the seed to be predicted. More specifically, the information acquiring unit 600 acquires the state of the seed from the harvesting process table 411, the treatment process table 412, the storage process table 413, the transporting process table 414, and the crop cultivation process table 415 in accordance with the data configuration of the input data in the third learning model 12C.

In the above-described manner, the generation processing unit 601 generates the seed quality information for the seed, on the basis of the seed quality information that is output by inputting, into the third learning model 12C as input data, the seed management information about the seed to be predicted acquired by the information acquiring unit 600.

As described above, according to the information processing device 6b and the information processing method according to the present embodiment, the germination rate and healthy seedling rate of that seed are predicted as the seed quality information for the seed to be predicted, by inputting the seed management information about the seed to be predicted into the third learning model 12C. Thus, since the seed management information according to the present embodiment includes only the state of the seed in each process (harvesting process, treatment process, storage process, transporting process, and crop cultivation process), the seed quality can be easily predicted in each of phases from harvest of seeds to cultivation of crops through each process.

### Other Embodiments

The present invention is not restricted to the embodiments described above, but can be implemented with various changes within the scope of not departing from the main purpose of the present invention. All of them are included in the technical concept of the present invention.

While, in the above-described embodiment, the information acquiring unit 600 of the information processing devices 6, 6a and 6b acquires, as the seed management information, the detection results of the sensor group 40 registered in the seed management database 41 by referring to the seed management database 41, the detection results of the sensor group 40 (or part or it) may be directly acquired from the sensor group 40, for example.

While, in the above-described embodiment, the information acquiring unit 600 of the information processing devices 6, 6a and 6b acquires, as the seed management information, the operation history and the confirmation result in each process registered in the seed management database 41 by referring to the seed management database 41, the information acquiring unit 600 may acquire the operation plan of each process (or part or it) as the seed management information. In that case, the information acquiring unit 600 may acquire a plurality of the seed management information based on a plurality of different operation plans, and the generation processing unit 601 may input the plurality of seed management information acquired by the information acquiring unit 600 as input data into the first to third learning models 12A to 12C, so as to generate a plurality of pieces of the seed quality information about the operation of each process performed on the basis of each operation plan. This can compare the seed quality information for each operation plan, and therefore can be used for decision of operation plans.

While, in the above-described embodiment, the information processing devices 6, 6a and 6b predict the seed quality information about a specific time point, the information processing devices 6, 6a and 6b may predict the seed quality information about a plurality of time points. For example, the information processing devices 6, 6a and 6b may predict the seed quality information about a specific time point and the seed quality information about a time point future than that specific time point, or predict changes in seed quality information over time by predicting the seed quality information about a plurality of future time points (e.g., weekly or monthly). In that case, it suffices to appropriately change the data configurations of the training data and the learning model.

While, in the above-described embodiment, the process management device 4, the machine learning devices 5, 5a and 5b and the information processing devices 6, 6a and 6b are composed of separate devices, the three devices may be composed of a single device, or two of the three devices may be composed of a single device. In addition, at least one of the machine learning devices 5, 5a and 5b and the information processing devices 6, 6a and 6b may be incorporated in the operator terminal device 2 or the manager terminal device 3.

While, in the above-described embodiment, the neural network employed as a learning model that implements the machine learning of the machine learning unit 501, other machine learning models may also be employed. Examples of other machine learning models include tree types such as decision trees and regression trees, ensemble learning such as bagging and boosting, neural net types (including deep learning) such as recurrent neural networks, convolutional neural networks and LSTM, clustering types such as hierarchical clustering, non-hierarchical clustering, k-nearest neighbor method, and k-means method, multivariate analysis such as principal component analysis, factor analysis, and logistic regression, and support vector machines.

### Machine Learning Program and Information Processing Program

The present invention may be provided in the form of a program (machine learning program) that causes the computer 900 to function as each unit of the machine learning devices 5, 5a and 5b, and/or a program (machine learning program) that causes the computer 900 to execute each process of the machine learning method. In addition, the present invention may be provided in the form of a program (information processing program) that causes the computer 900 to function as each unit of the information processing devices 6, 6a and 6b, and/or a program (information processing program) that causes the computer 900 to execute each process of the information processing method according to the above-described embodiments.

### Inference Device, Inference Method and Inference Program

The present invention may be provided not only in the form of the information processing devices 6, 6a and 6b (information processing method or information processing program) according to the above-described embodiments, but also in the form of an inference device (inference method or inference program) used for inferring the seed quality information. In that case, the inference device (inference method or inference program) may include a memory, and a processor that executes a series of processes. The series of processes includes an information acquisition process (information acquisition process) of acquiring the seed management information about the seed to be predicted, and an inference process (inference process) of inferring the seed quality information for the seed, upon acquiring the seed management information through the information acquisition process.

When provided in the form of the inference device (inference method or inference program), it may be more easily applied to various devices than the case where the information processing device is mounted. A person skilled in the art naturally understands that when the inference device (inference method or inference program) infers the seed quality information, the inference method implemented by the generation processing unit may be applied by using the trained learning model generated by the machine learning device and the machine learning method according to the above-described embodiments.

### Reference Signs List

1 Seed management system, 2 Operator terminal device, 3 Manager terminal device,
4 Process management device, 5, 5a, 5b Machine learning device,
6, 6a, 6b Information processing device, 7 Network
10 Seed collection/cultivation environment, 11 Crop cultivation environment,
12 Learning model, 12A First learning model,
12B Second learning model, 12C Third learning model,
13 Training data, 13A First training data,
13B Second training data, 13C Third training data,
40 Sensor group, 41 Seed management database,
50 Control section, 51 Communication unit, 52 Training data storage unit,
53 Trained model storage unit,
60 Control section, 61 Communication unit, 62 Trained model storage unit,
410 Seed collection/cultivation process table, 411 Harvesting process table,
412 Treatment process table, 413 Storage process table,
414 Transporting process table, 415 Crop cultivation process table,
416 Seed quality table,
500 Training data acquiring unit, 501 Machine learning unit,
600 Information acquiring unit, 601 Generation processing unit, 602 Output processing unit,
900 Computer

## Claims

1. An information processing device comprising:
an information acquiring unit configured to acquire, as seed management information about a seed to be predicted, a state of a plant for seed collection from which the seed is collected and a state of the seed; and
a generation processing unit configured to generate seed quality information for the seed to be predicted, by inputting the seed management information acquired by the information acquiring unit into a learning model that has been taught, through machine learning, a correlation between the seed management information about a seed being a training object and the seed quality information indicating quality related to germination or maturity of the seed.

2. An information processing device comprising:
an information acquiring unit configured to acquire, as seed management information about a seed to be predicted, a state of a plant for seed collection from which the seed is collected; and
a generation processing unit configured to generate seed quality information for the seed to be predicted, by inputting the seed management information acquired by the information acquiring unit into a learning model that has been taught, through machine learning, a correlation between the seed management information about a seed being a training object and the seed quality information indicating quality related to germination or maturity of the seed.

3. An information processing device comprising:
an information acquiring unit configured to acquire, as seed management information about a seed to be predicted, a state of the seed; and
a generation processing unit configured to generate seed quality information for the seed to be predicted, by inputting the seed management information acquired by the information acquiring unit into a learning model that has been taught, through machine learning, a correlation between the seed management information about a seed being a training object and the seed quality information indicating quality related to germination or maturity of the seed.

4. The information processing device according to claim 1 or 2, wherein the state of the plant for seed collection includes at least one of:
a state of a cultivation environment of the plant for seed collection;
a state of growth of the plant for seed collection; and
a state of pathogenic contamination of the plant for seed collection.

5. The information processing device according to claim 4, wherein the state of the cultivation environment includes at least one of:
a climatic condition of the cultivation environment;
a soil condition of the cultivation environment; and
a disease occurrence state in a surrounding environment of the cultivation environment.

6. The information processing device according to claim 4 or 5, wherein the state of growth includes at least one of:
a biological state of the plant for seed collection; and
an occurrence state of contamination of the plant for seed collection.

7. The information processing device according to any one of claims 4 to 6, wherein the state of the pathogenic contamination includes at least one of:
a presence state of a pathogen in the plant for seed collection; and
a presence state of a vector organism that transmits the pathogen in the plant for seed collection.

8. The information processing device according to claim 1 or 3, wherein the state of the seed includes at least one of:
a state of a harvesting process of the seed;
a state of a treatment process of the seed;
a state of a storage process of the seed;
a state of a transporting process of the seed; and
a state of a cultivation process of the seed.

9. The information processing device according to claim 8, wherein the state of the harvesting process includes an inspection result of the seed in the harvesting process.

10. The information processing device according to claim 8 or 9, wherein the state of the treatment process includes at least one of:
a state of a dosing treatment of the seed; and
a state of a processing treatment of the seed.

11. The information processing device according to any one of claims 8 to 10, wherein the state of the storage process includes at least one of:
an inspection result of the seed in the storage process; and
a state of a storage environment of the seed.

12. The information processing device according to any one of claims 8 to 11, wherein the state of the transporting process includes at least one of:
the inspection result of the seed in the transporting process; and
a state of a transport environment of the seed.

13. The information processing device according to any one of claims 8 to 12, wherein the state of the cultivation process includes at least one of:
a state of a cultivation environment of the seed; and
a state of pathogenic contamination of the seed.

14. An inference device comprising:
a memory; and
a processor, wherein
the processor executes:
an information acquisition process of acquiring, as seed management information about a seed to be predicted, a state of a plant for seed collection from which the seed is collected and a state of the seed; and
an inference process of inferring seed quality information indicating quality related to germination or maturity of the seed to be predicted, upon acquiring the seed management information in the information acquisition process.

15. An inference device comprising:
a memory; and
a processor, wherein
the processor executes:
an information acquisition process of acquiring, as seed management information about a seed to be predicted, a state of a plant for seed collection from which the seed is collected; and
an inference process of inferring seed quality information indicating quality related to germination or maturity of the seed to be predicted, upon acquiring the seed management information in the information acquisition process.

16. An inference device comprising:
a memory; and
a processor, wherein
the processor executes:
an information acquisition process of acquiring, as seed management information about a seed to be predicted, a state of the seed; and
an inference process of inferring seed quality information indicating quality related to germination or maturity of the seed to be predicted, upon acquiring the seed management information in the information acquisition process.

17. A machine learning device comprising:
a training data storage unit configured to store a plurality of sets of training data composed of seed management information and seed quality information, the seed management information including a state of a plant for seed collection from which a seed being a training object is collected and a state of the seed, the seed quality information indicating quality related to germination or maturity of the seed;
a machine learning unit configured to teach a learning model a correlation between the seed management information and the seed quality information, by inputting the plurality of sets of training data into the learning model; and
a trained model storage unit configured to store the learning model that has been taught the correlation by the machine learning unit.

18. A machine learning device comprising:
a training data storage unit configured to store a plurality of sets of training data composed of seed management information and seed quality information, the seed management information including a state of a plant for seed collection from which a seed being a training object is collected, the seed quality information indicating quality related to germination or maturity of the seed;
a machine learning unit configured to teach a learning model a correlation between the seed management information and the seed quality information, by inputting the plurality of sets of training data into the learning model; and
a trained model storage unit configured to store the learning model that has been taught the correlation by the machine learning unit.

19. A machine learning device comprising:
a training data storage unit configured to store a plurality of sets of training data composed of seed management information and seed quality information, the seed management information including a state of a seed being a training object, the seed quality information indicating quality related to germination or maturity of the seed;
a machine learning unit configured to teach a learning model a correlation between the seed management information and the seed quality information, by inputting the plurality of sets of training data into the learning model; and
a trained model storage unit configured to store the learning model that has been taught the correlation by the machine learning unit.

20. An information processing method comprising:
acquiring, as seed management information about a seed to be predicted, a state of a plant for seed collection from which the seed is collected and a state of the seed; and
generating seed quality information for the seed to be predicted, by inputting the seed management information acquired through the acquiring into a learning model that has been taught, through machine learning, a correlation between the seed management information about a seed being a training object and the seed quality information indicating quality related to germination or maturity of the seed.

21. An information processing method comprising:
acquiring, as seed management information about a seed to be predicted, a state of a plant for seed collection from which the seed is collected; and
generating seed quality information for the seed to be predicted, by inputting the seed management information acquired through the acquiring into a learning model that has been taught, through machine learning, a correlation between the seed management information about a seed being a training object and the seed quality information indicating quality related to germination or maturity of the seed.

22. An information processing method comprising:
acquiring, as seed management information about a seed to be predicted, a state of the seed; and
generating seed quality information for the seed to be predicted, by inputting the seed management information acquired through the acquiring into a learning model that has been taught, through machine learning, a correlation between the seed management information about a seed being a training object and the seed quality information indicating quality related to germination or maturity of the seed.

23. An inference method executed by an inference device including a memory and a processor, the inference method comprising, executed by the processor:
an information acquisition process of acquiring, as seed management information about a seed to be predicted, a state of a plant for seed collection from which the seed is collected, and a state of the seed; and
an inference process of inferring seed quality information indicating quality related to germination or maturity of the seed to be predicted when the seed management information is acquired in the information acquisition process.

24. An inference method executed by an inference device including a memory and a processor, the inference method comprising, executed by the processor:
an information acquisition process of acquiring, as seed management information about a seed to be predicted, a state of a plant for seed collection from which the seed is collected; and
an inference process of inferring seed quality information indicating quality related to germination or maturity of the seed to be predicted when the seed management information is acquired in the information acquisition process.

25. An inference method executed by an inference device including a memory and a processor, the inference method comprising, executed by the processor:
an information acquisition process of acquiring, as seed management information about a seed to be predicted, a state of the seed; and
an inference process of inferring seed quality information indicating quality related to germination or maturity of the seed to be predicted when the seed management information is acquired in the information acquisition process.

26. A machine learning method comprising:
storing, in a training data storage unit, a plurality of sets of training data composed of seed management information and seed quality information, the seed management information including a state of a plant for seed collection from which a seed being a training object is collected and a state of the seed, the seed quality information indicating quality related to germination or maturity of the seed;
teaching a learning model a correlation between the seed management information and the seed quality information, by inputting the plurality of sets of training data into the learning model; and
storing, in a trained model storage unit, the learning model that has been taught the correlation through the teaching.

27. A machine learning method comprising:
storing, in a training data storage unit, a plurality of sets of training data composed of seed management information and seed quality information, the seed management information including a state of a plant for seed collection from which a seed being a training object is collected, the seed quality information indicating quality related to germination or maturity of the seed;
teaching a learning model a correlation between the seed management information and the seed quality information, by inputting the plurality of sets of training data into the learning model; and
storing, in a trained model storage unit, the learning model that has been taught the correlation through the teaching.

28. A machine learning method comprising:
storing, in a training data storage unit, a plurality of sets of training data composed of seed management information and seed quality information, the seed management information including a state of a seed being a training object, the seed quality information indicating quality related to germination or maturity of the seed;
teaching a learning model a correlation between the seed management information and the seed quality information, by inputting the plurality of sets of training data into the learning model; and
storing, in a trained model storage unit, the learning model that has been taught the correlation through the teaching.
